# EUROPÄISCHE PATENTSCHRIFT

(11) **EP 2 627 550 B1**
(45) Veröffentlichungstag und Bekanntmachung des Hinweises auf die Patenterteilung: **25.02.2015**
(21) Anmeldenummer: 11758400.3
(22) Anmeldetag: 19.09.2011
(51) Int. Cl.: B62D 5/04, B62D 6/04

(54) **VERFAHREN ZUR ABSTIMMUNG EINES LENKRADRÜCKSTELLMOMENTES UND ELEKTROMECHANISCHES KRAFTFAHRZEUGLENKSYSTEM**
METHOD FOR ADJUSTING A STEERING WHEEL RESTORING TORQUE AND ELECTROMECHANICAL MOTOR VEHICLE STEERING SYSTEM
PROCÉDÉ DE RÉGLAGE D'UN COUPLE DE RAPPEL DU VOLANT DE DIRECTION ET SYSTÈME DE DIRECTION ÉLECTROMÉCANIQUE POUR VÉHICULE AUTOMOBILE

(30) Priorität: 12.10.2010 DE 102010048261
(43) Veröffentlichungstag der Anmeldung: 21.08.2013
(73) Patentinhaber: Volkswagen Aktiengesellschaft, 38440 Wolfsburg (DE)
(72) Erfinder: KWASNY, Olaf, 38229 Salzgitter (DE); APEL, Andreas, 38228 Salzgitter (DE); BERKNER, Stefan, 38518 Gifhorn (DE)
(86) Internationale Anmeldenummer: PCT/EP2011/004668
(87) Internationale Veröffentlichungsnummer: WO 2012/048782

(56) Entgegenhaltungen:
- EP-A1- 1 849 682
- EP-A1- 2 112 050
- EP-A2- 1 944 220
- DE-A1- 10 244 070

## Beschreibung

Die Erfindung bezieht sich auf ein Verfahren zur Abstimmung eines Lenkradrückstellmomentes, das als solches ein Fahrzeuglenkrad in eine zur Geradeausfahrt führende Winkelstellung zurückdrängt, wobei das Lenkradrückstellmoment nach Maßgabe einer Rückstellfunktion eingestellt wird, die als solche eine momentane Lenkwinkelstellung berücksichtigt, die Rückstellfunktion so gestaltet ist, dass diese Rückstellmomente vorgibt, die mit zunehmender Auslenkung des Fahrzeuglenkrades aus der zum Geradeauslauf führenden Winkelstellung zunehmen, die Rückstellfunktion im Bereich einer zur Geradeausfahrt vorgesehene Winkelstellung eine Nullstelle aufweist und die Rückstellfunktion im Umgebungsbereich dieser Nullstelle Rückstellmomente vorsieht, die betragsmäßig niedriger sind als die maximalen durch die Rückstellfunktion veranlassbaren Rückstellmomente.

Weiterhin bezieht sich die Erfindung auf ein elektromechanisches Lenksystem mit einem elektromechanischen Lenkhilfsmotor der durch eine Ausgangssteuerung angesteuert wird, wobei die Ausgangssteuerung derart konfiguriert ist, dass diese den Lenkhilfsmotor derart ansteuert, dass an einem Fahrzeuglenkrad durch den Fahrer ein Rückstellmoment wahrnehmbar ist, welches das Lenkrad in eine zur Geradeausfahrt führende Winkelstellung zurückdrängt, das Lenkradrückstellmoment nach Maßgabe einer Rückstellfunktion eingestellt wird die als solche eine momentane Lenkwinkelstellung berücksichtigt, die Rückstellfunktion so gestaltet ist, dass diese Rückstellmomente vorgibt; die mit zunehmender Auslenkung des Fahrzeuglenkrades aus der zum Geradeauslauf führenden Winkelstellung zunehmen, die Rückstellfunktion im Bereich einer zur Geradeausfahrt vorgesehenen Winkelstellung eine Nullstelle aufweist, und die Rückstellfunktion im Umgebungsbereich dieser Nullstelle Rückstellmomente vorsieht, die betragsmäßig kleiner als die maximalen Rückstellmomente sind.

Das vorgenannte Lenkradrückstellmoment ergibt sich durch besondere Abstimmung des Unterstützungsbeitrags des Lenkhilfsmotors. Dieses Lenkradrückstellmoment ist derart orientiert, dass dieses das Fahrzeuglenkrad in seine bei Geradeausfahrt eingenommene Ausgangsstellung zurückdrängt. Die Ansteuerung des Lenkhilfsmotors kann dabei mit relativ hoher Dynamik erfolgen, so dass etwaige während des Betriebs eines entsprechenden Kraftfahrzeuges über das Lenkgestänge auf das Lenkgetriebe einwirkende Reaktionskräfte weitgehend kompensiert werden. Die Ansteuerung des Lenkhilfsmotors erfolgt insoweit zumindest phasenweise mit einer Dynamik, die höher sein kann als die Dynamik der fahrerseitig veranlassten Lenkoperationen.

Aus DE 10 2006 015 636 A1 ist ein Verfahren zum Kompensieren von Schiefzieheffekten durch Ansteuerung eines elektromechanischen Lenksystems bekannt. Bei diesem Verfahren wird während des Betriebs des Fahrzeuges die Abhängigkeit des zur Führung des Lenkrades erforderlichen Handmomentes von einer das Antriebs- und Beschleunigungsverhalten des Fahrzeugs abbildenden Größe erfasst. Aus dieser Abhängigkeit wird eine Korrelationsfunktion errechnet, die bei entsprechenden Fahrzuständen bei der Berechung des Lenkradrückstellmomentes berücksichtigt wird.

Aus DE 102 44 070 A1 ist ebenfalls ein Verfahren zur Abstimmung eines Lenkradrückstellmomentes bekannt. Bei diesem Verfahren werden für die Abstimmung des Rückstellmomentes in Abhängigkeit von der momentanen Fahrsituation ein Kurzzeitkorrekturwert und ein Langzeitkorrekturwert berücksichtigt.

Aus DE 10 2005 045 243 A1 ist eine Einrichtung zum Kompensieren von Schiefzieheffekten während des Betriebs eines Kraftfahrzeuges bekannt. Bei dieser Einrichtung wird ein Korrektursignal errechnet, durch welches etwaige durch Asymmetrien des Antriebsstranges verursachte Auswirkungen auf das Lenkradrückstellmoment zumindest weitgehend kompensiert werden.

Des Weiteren offenbart Dokument EP 1 944 220 A2 die Präambel des Anspruchs 1.

Der Erfindung liegt die Aufgabe zugrunde, Lösungen zu schaffen, durch welche es möglich wird, ein elektromechanisches Lenksystem derart zu betreiben, dass sich bei einem hiermit ausgestatteten Kraftfahrzeug ein präziser Geradeauslauf in Verbindung mit einer seitens des Fahrers als passend empfundenen Anlenkcharakteristik ergibt.

Diese Aufgabe wird durch ein Verfahren zur Abstimmung eines Lenkradrückstellmomentes gemäß Patentanspruch 1 gelöst. Bei dem erfindungsgemäßen wird das Lenkradrückstellmoment nach Maßgabe einer Rückstellfunktion eingestellt wird, die als solche eine momentane Lenkwinkelstellung berücksichtigt. Die Rückstellfunktion ist so gestaltet, dass diese Rückstellmomente vorgibt, die mit zunehmender Auslenkung des Fahrzeuglenkrades aus der zum Geradeauslauf führenden Winkelstellung zunehmen. Das Verfahren.zeichnet sich dadurch aus, dass ein der Rückstellfunktion zugeführter Winkelwert durch einen Winkeloffsetwert verändert wird, wobei dieser Winkeloffsetwert so abgestimmt wird, dass der Betrag des am Lenkrad vom Fahrer wahrgenommenen Lenkradrückstellmoments bei Geradeausfahrt unterhalb eines Schwellwertes liegt.

Dadurch wird es auf vorteilhafte Weise möglich, die Geradlaufcharakteristik eines entsprechenden Fahrzeuges so zu verbessern, dass sowohl Störereignisse mit hoher Dynamik, wie beispielsweise Seitenwindeinflüsse, als auch Störereignisse mit niedriger Dynamik, wie beispielsweise durch den Reifendruck oder die Fahrzeugbeladung bestimmte Rückwirkungen auf das Lenksystem, in einer seitens des Fahrers intuitiv als angemessen empfundenen Weise kompensiert werden.

Das erfindungsgemäße Konzept bietet eine besonders vorteilhafte und zum Fahrzeuggeradeauslauf führende Adaptionsfunktion. Das erfindungsgemäße Konzept kann in vorteilhafter Weise umgesetzt werden, indem ein Winkeloffset errechnet wird, der auf den Lenkradwinkel angerechnet wird, der als solcher der zur Errechnung eines Active-Return-Eingangsignals herangezognen Rückstellfunktion zugrundegelegt wird. Dieser Winkeloffset wird derart festgelegt, dass der Betrag des Handmoments bei Geradeausfahrt unterhalb einer applizierbaren Schwelle liegt. Dieser Ansatz bietet in vorteilhafter Weise eine inhärente Systemsicherheit, da das durch das Active-Return Signal angesteuerte Rückstellmoment vom Fahrer stets überlenkt werden kann. Zudem kann durch das erfindungsgemäße Konzept ein symmetrischer Handmomentenaufbau beim Anlenken aus der Geradeausfahrt erreicht werden.

Durch das erfindungsgemäße Konzept können auch Auswirkungen von Asymmetrien des Radantriebsstranges sowie temporäre Traktionsmomentendifferenzen kompensiert werden. Durch das erfindungsgemäße Konzept kann ein hoher Symmetriegrad des Handmomentengradienten beim Anlenken nach links bzw. rechts erreicht werden. Dieses Phänomen wird als hochkomfortable Systemeigenschaft wahrgenommen.

Durch das erfindungsgemäße Konzept kann Variationen des Fahrzeugs, insbesondere Variationen des Beladungszustandes, sowie auch äußeren Störungen durch einen Winkeloffset Rechnung getragen werden, der durch einen Lernalgorithmus fortlaufend angepasst wird. Dieser Lernalgorithmus kann eine Kurzzeitlernroutine und eine Langzeitlernroutine mit unterschiedlichen, applizierbaren Lernschwellen und Lerngeschwindigkeiten umfassen. Ein durch die Langzeitlernroutine erfasster Langzeitlernwert wird über Zündungszyklen hinweg gespeichert und erfasst konstante bzw. sich nur langsam ändernde (Fahrzeug-)Eigenschaften und Betriebsbedingungen. Ein durch die Kurzzeitlernroutine errechneter Kurzzeitlernwert gleicht sich mit höherer Dynamik ändernde Umfeldstörungen (z.B. Änderungen der Fahrbahnneigung, Seitenwindeinflüsse, asymmetrische Traktionsverhältnisse, etc.) aus und wird vorzugsweise spätestens bei jedem Zündungswechsel gelöscht. Vorzugsweise wird für beide Routinen ein rekursiver Algorithmus mit gleitender Minimierung des Lernfehlers verwendet, der durch moderaten Hardwareeinsatz abgearbeitet werden kann. Alternativ hierzu kann der Winkeloffset auch durch Kennfeldansätze oder anderweitige Funktionen errechnet und laufend aktualisiert oder angepasst werden.

Für die Ermittlung des Winkeloffsets werden vorzugsweise der Lenkradrestwinkel, die Steigungsänderung der Winkel/Momenten Kennlinie und/oder das Resthandmoment berücksichtigt. Die Abstimmung des Winkeloffsets unter Berücksichtigung des Resthandmoments hat sich bei Versuchen als äußerst robust und zuverlässig erwiesen. Die Errechnung des ggf. erforderlichen Winkeloffsets erfolgt vorzugsweise im Rahmen hinreichend andauernder Geradeausfahrt oder statistischer Bewertung des erfassten Lenkmomentes, ggf. in Verbindung mit damit einhergehenden Querbeschleunigungen. Daraus ergibt sich eine Logik aus mehreren Lernbedingungen. Zu diesen Lernbedingungen oder Eingangsgrößen können der Lenkradwinkel, u.U. die gemessene oder gerechnete Querbeschleunigung, die Lenkwinkelgeschwindigkeit, die Fahrgeschwindigkeit, u.U. die gemessene oder gerechnete Längsbeschleunigung sowie ggf. Eingiffsflags von Assistenz- und Schlupfregelsystemen zählen. Diese Lernbedingungen sind vorzugsweise untereinander wichtbar (z.B. linear mit einem Totband und einer Obergrenze).

Die zur Einstellung des Rückstellmomentes vorgesehene Rückstellfunktion ist vorzugsweise so abgestimmt, dass diese im Umfeld des zum Vorzeichenwechsel des Rückstellmomentes führenden Bereiches betragsmäßig unterproportional zur Nullpunktabweichung ansteigende Rückstellmomente vorgibt. Außerhalb dieses Bereiches erfolgt vorzugsweise eine schwach überproportionale Zunahme des Betrags des Rückstellmomentes. Diese überproportionale Zunahme kann beispielsweise für Lenkradauslenkwinkel im Bereich von 4° bis 110° vorgesehen sein. Für größere Lenkradauslenkwinkel kann eine degressive Zunahme, vorzugsweise ein asymptotischer Zulauf auf einen Maximalwert vorgesehen sein.

Die Erfindung richtet sich primär auf die positionierung des Bereichs der vorzugsweise zu einem symmetrischen Rückstellverhalten führenden Rückstellfunktion. Die Rückstellfunktion kann in jenem Bereich so gestaltet sein, dass diese einen Hystereseeffekt bietet. Die Nachführung des Nullpunkts oder der vorzugsweise extrem schmalen, einen Vorzeichenwechsel des Rückstellmomentes bedingenden Zone der Rückstellfunktion erfolgt vorzugsweise derart, das die momentane Lenkradstellung allenfalls mit geringer Dynamik unterlaufen wird, so dass seitens des Fahrers keine überraschende Eigendynamik des Lenksystems wahrgenommen wird.

Der für eine Translation der Mittenstellung der Rückstellfunktion maßgebliche Schwellwert des Handmomentes kann unter Berücksichtigung fahrdynamischer Parameter, insbesondere der Federungsdynamik und des Motorbetriebszustandes abgestimmt werden. Bei Bewegung des Fahrzeuges auf unebener Fahrbahn können größere Schwellwerte für die Translation der Mittenstellung vorgesehen sein. Bei Fahrten auf weitgehend gerader Fahrbahn, insbesondere bei Fahrbedingungen wie sie für Autobahnen typisch sind, kann die Modifikation der Winkelwerte, d.h. die Generierung eines Offsets, oder auch eine Translation der Rückstellfunktion nach Maßgabe relativ niedriger Schwellwerte erfolgen. Diese Schwellwerte entsprechen vorzugsweise einem Rückstellmoment, wie es bei einem Fahrzeug zu erwarten ist, bei welchem eine Auslenkung des Lenkrades aus einer tatsächlich zum Geradeauslauf führenden Winkelstellung um etwa 4° erfolgt. Diese Schwellwerte können selbsttätig geschwindigkeitsabhängig oder ggf. auch fahrerseitig durch eine Betriebsmodusselektion eingestellt werden.

Die oben genannte Aufgabe wird ferner durch ein elektromechanisches Lenksystem gemäß Patentanspruch 10 gelöst, welches die Durchführung des vorstehend erläuterten Verfahrens gestattet.

Weitere Einzelheiten und Merkmale der Erfindung ergeben sich aus der nachfolgenden Beschreibung in Verbindung mit der Zeichnung. Es zeigt:
- Figur 1: eine Schemadarstellung zur Veranschaulichung des Aufbaus eines Kraftfahrzeuges, das mit einem erfindungsgemäßen elektromechanischen Lenksystem ausgestattet ist;
- Figur 2: ein Blockschaltbild zur Veranschaulichung der Funktionsweise der Steuereinrichtung für ein erfindungsgemäßes Lenksystem, das eine Abstimmung des Geradeauslaufverhaltens eines Kraftfahrzeuges ermöglicht;
- Figur 3: eine vereinfachte Darstellung einer Lenkradrückstellfunktion, die derart gestaltet ist, dass diese in einem Bereich nahe der Lenkradnullstellung hinsichtlich ihres Betrags relativ kleine Rückstellmomente generiert.

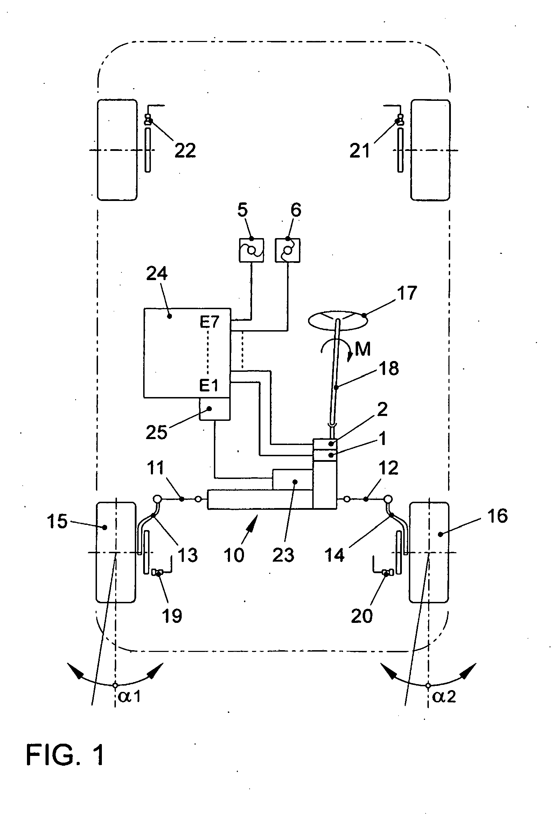

In Figur 1 ist stark vereinfacht ein Kraftfahrzeug dargestellt, das mit einem elektromechanischen Lenksystem ausgestattet ist. Das Lenksystem umfasst ein Lenkgetriebe 10 das über Spurstangen 11, 12 mit den Lenkschenkeln 13, 14 einer Vorderradaufhängung gekoppelt ist. Über diese Vorderradaufhängung sind Vorderräder 15, 16 derart lenkbar aufgehängt, dass nach Maßgabe der Querverlagerung der Spurstangen 11, 12 die Lenkwinkel α1, α2 in an sich bekannter Weise einstellbar sind.

Das Lenksystem ist mit einer Drehmomentensensoreinrichtung 1 ausgestattet, über welche ein Drehmoment M erfasst werden kann, das fahrerseitig an ein Lenkrad 17 angelegt wird oder an der Lenkwelle 18 anliegt. Das Lenksystem ist weiterhin mit einem Lenkwinkelsensor 2 ausgestattet, über welchen hinsichtlich der Drehung oder Drehposition der Lenkwelle 18 indikative Signale erfasst werden.

Das hier vereinfacht gezeigte Kraftfahrzeug umfasst weiterhin einen Querbeschleunigungssensor 5 und einen Längsbeschleunigungssensor 6. Weiterhin können durch Radsensoren 19, 20, 21, 22 weitere Informationen zum Fahrzustand des Fahrzeuges erfasst werden.

Das Lenkgetriebe 10 umfasst einen Lenkhilfsmotor 23. Dieser Lenkhilfsmotor 23 wird über eine Steuereinrichtung 24 angesteuert. Diese Steuereinrichtung 24 ist mit einer Ausgangssteuerung 25 gekoppelt, durch welche eine sog. Active-Return Funktion bereitgestellt wird. Diese Active-Return Funktion bewirkt, dass das Lenkrad 17 mit einer bestimmten Rückstellcharakteristik in eine im Wesentlichen zur Geradeausfahrt führende Drehwinkelstellung zurückgedrängt wird. Der Steuereinrichtung 24 werden über Eingänge E1... E7 seitens der Sensoren 1 ... 6, sowie ggf. der Radsensoren 19 ... 22 generierte Signale in ggf. vorverarbeiteter Form zugeführt.

Bei dem in Figur 1 dargestellten System werden der Steuereinrichtung 24 über die Eingänge E1...E7 Signale hinsichtlich des Handmomentes, des Lenkradwinkels, der momentanen Fahrzeuggeschwindigkeit Vref, der Lenkradwinkelgeschwindigkeit, der Quer- und Längsbeschleunigung sowie der Stati von Schlupfregel- und Fahrerassistenzsystemen zugeführt.

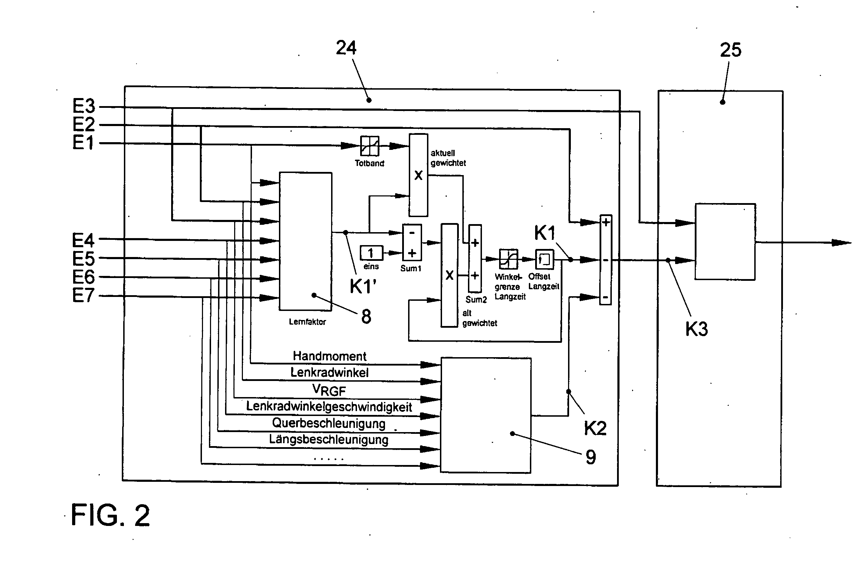

In Figur 2 ist beispielhaft ein mögliches Realisierungskonzept der Steuereinrichtung 24 sowie der angebundenen Ausgangssteuerung 25 veranschaulicht. Die an den vorgenannten Eingängen 1...7 anliegenden Signale werden einem ersten Untersystem 8 und einem zweiten Untersystem 9 zugeführt. Über das erste Untersystem 8 wird aus den genannten Signalen ein vorläufiger Langzeitkorrekturwert K1' errechnet. Über das zweite Untersystem wird aus den genannten Signalen ein Kurzzeitkorrekturwert K2 errechnet.

Der vorläufige Langzeitkorrekturwert K1' wird, wie lediglich beispielhaft dargestellt, weiteren Verarbeitungsansätzen zugrundegelegt. Auf Grundlage dieser weiteren Verarbeitungsansätze wird letztlich ein Langzeitkorrekturwert K1 errechnet. Dieser Langzeitkorrekturwert K1 beschreibt einen Winkelbeitrag, der in Verbindung mit dem ebenfalls einen Winkelbeitrag darstellenden Kurzzeitkorrekturwert K2 bei der Einstellung des Rückstellmomentes eines Fahrzeuglenkrades berücksichtigt werden soll. Die beiden Korrekturwerte K1, K2 werden summiert und liefern in Verbindung mit dem tatsächlichen momentanen Lenkradwinkel einen modifizierten Lenkradwinkelsignal K3. Dieser modifizierte Lenkradwinkel K3 wird der zur Ansteuerung eines elektromechanischen Lenkhilfsmotors vorgesehenen Ausgangssteuerung 25 zugeführt. Diese Ausgangssteuerung 25 ist derart gestaltet, dass diese eine sog. Activ-Return Funktion bietet. Diese Funktion führt dazu, dass der vorgenannte Lenkhilfsmotor (vgl. Fig. 1 Bezugszeichen 23) derart angesteuert wird, dass die geforderte Lenkoperation derart abgewickelt wird, dass der Fahrer am Lenkrad ein durch eine Rückstellfunktion festgelegtes Handmoment wahrnimmt und ggf. zu überwinden hat.

Durch die erfindungsgemäße Modifikation des der Ausgangssteuerung 25 zugeführten Lenkradwinkelsignals K3 ergibt sich im Ergebnis eine Verschiebung (Offset) der Nullpunktslage der Rückstellmomentenfunktion gegenüber einer Winkelposition, die bei Normalbedingungen und mit lediglich geringer Dynamik bewegtem Fahrzeug zur Geradeausfahrt führt.

Der über das erste Untersystem 8 errechnete Langzeitkorrekturwert K1' und der über das zweite Untersystem 9 errechnete Kurzzeitkorrekturwert K2 können über Rekursivalgorithmen errechnet werden, die von einigen Parametern abgesehen weitgehend ähnlich sind. Bei dem hier gezeigten Ansatz werden sowohl der Langzeitkorrekturwert K1' als auch der Kurzzeitkorrekturwert K2 unter Berücksichtigung des Handmomentes, des Lenkradwinkels, der momentanen Fahrzeuggeschwindigkeit, der Längs- und Querbeschleunigung sowie der Stati von Schlupfregel- und Fahrerassistenzsystemen errechnet. Die Längs- und die Querbeschleunigung kann insbesondere aus den Radsensorsignalen (vgl. Fig. 1 Sensoren 19...22) eines ABS oder ESP Systems abgeleitet werden.

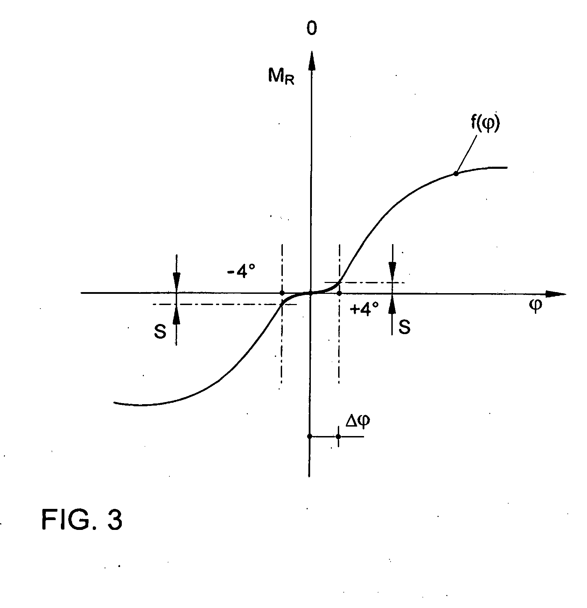

In Figur 3 ist beispielhaft eine Rückstellfunktion f(ϕ) dargestellt. Diese Rückstellfunktion f(ϕ) gibt an, welche Rückstellmomente M letztlich vom Fahrer am Fahrzeuglenkrad wahrgenommen werden sollen. Diese Funktion kann parametrisiert sein und in Abhängigkeit von den momentanen Fahrbedingungen unterschiedliche Gestalt annehmen. Die Rückstellfunktion f(ϕ) umfasst einen Bereich, der als solcher den zur Geradeausfahrt führenden Lenkradwinkel (Nullwinkel) beinhaltet. Dieser Bereich ist relativ schmal (vorzugsweise innerhalb von +/- 4° Lenkradauslenkung aus der Nullstellung) und erstreckt sich im Wesentlichen nur über Lenkradwinkel, die je nach Beladungszustand des Fahrzeuges und bei nicht mit übermäßigem Radschlupf verbundenen Störeinflüssen für die Herbeiführung einer geradlinigen Fahrt eines Fahrzeuges in Betracht kommen. Dieser Bereich sieht Rückstellmomente vor, die im Vergleich zu den maximalen, durch die Rückstellfunktion einstellbaren Rückstellmomenten betragsmäßig relativ klein sind, insbesondere weniger als 20%, vorzugsweise weniger als 12% des maximal einstellbaren Rückstellmomentes betragen.

Wird bei einem Fahrzeugbetriebszustand der anhand mehrerer (z.B. aller über die Eingänge 1 bis 6 in Figur 1 erfassten) Eingangssignale als Geradeausfahrt zu betrachten ist, festgestellt, dass das momentane Rückstellmoment M größer ist als ein ggf. adaptiv festgelegter Schwellwert S, so kann ein Winkeloffset Δϕ errechnet werden. Dieser Winkeloffset Δϕ wird so gewählt, dass eine nach diesem vorgenommene Verschiebung der Rückstellfunktion f(ϕ) nach links oder rechts zu einer Absenkung des Rückstellmomentes M auf den vorgenannten Schwellwert S führt. Nach Maßgabe dieses errechneten Winkeloffsets Δϕ wird das an der Ausgangssteuerung 25 anliegende Winkelsignal verändert.

Die möglichen Winkeloffsets Δϕ können durch einen Maximalwert begrenzt werden. Durch das erfindungsgemäße Konzept wird es möglich, die Rückstellfunktion f(ϕ) so "auszumitteln", dass deren zum Vorzeichenwechsel des Lenkmomentes führende Nullstelle an einer Lenkradwinkeistellung verortet ist, die unter den momentanen Fahrbedingungen zum Geradeauslauf des Fahrzeuges führt.

### Bezugszeichenliste

- 1: Drehmomentensensoreinrichtung
- 2: Lenkwinkelsensor
- 5: Querbeschleunigungssensor
- 6: Längsbeschleunigungssensor
- 8: erstes Untersystem
- 9: zweites Untersystem
- 10: Lenkgetriebe
- 11: Spurstange
- 12: Spurstange
- 13: Lenkschenkel
- 14: Lenkschenkel
- 15: Vorderrad
- 16: Vorderrad
- 17: Lenkrad
- 18: Lenkwelle
- 19: Radsensor
- 20: Radsensor
- 21: Radsensor
- 22: Radsensor
- 23: Lenkhilfsmotor
- 24: Steuereinrichtung
- 25: Ausgangssteuerung
- K1: Langzeitkorrekturwert
- K2: Kurzzeitkorrekturwert
- K3: Lenkradwinkelsignal
- f(ϕ): Rückstellfunktion
- Δϕ: Winkeloffset
- M: Drehmoment
- α1: Lenkwinkel
- α2: Lenkwinkel
- E1: Eingang
- E2: Eingang
- E3: Eingang
- E4: Eingang
- E5: Eingang
- E6: Eingang
- E7: Eingang

## Patentansprüche

1. Verfahren zur Abstimmung eines Lenkradrückstellmomentes (M), das als solches ein Fahrzeuglenkrad (17) in eine zur Geradeausfahrt führende Winkelstellung zurückdrängt, wobei:
- das Lenkradrückstellmoment (M) nach Maßgabe einer Rückstellfunktion (f(ϕ)) eingestellt wird, die als solche eine momentane Lenkwinkelstellung (ϕ) berücksichtigt,
- die Rückstellfunktion (f(ϕ)) so gestaltet ist, dass diese Rückstellmomente (M) vorgibt, die mit zunehmender Auslenkung des Fahrzeuglenkrades (17), aus der zum Geradeauslauf führenden Winkelstellung (ϕ) zunehmen,
- die Rückstellfunktion (f(ϕ)) im Bereich einer zur Geradeausfahrt vorgesehene Winkelstellung (ϕ) eine Nullstelle aufweist, und
- die Rückstellfunktion (f(ϕ)) im Umgebungsbereich dieser Nullstelle Rückstellmomente (M) vorsieht, die betragsmäßig niedriger sind als die maximalen durch die Rückstellfunktion (f(ϕ)) veranlassbaren Rückstellmomente (M),
**dadurch gekennzeichnet, dass**
ein der Rückstellfunktion (f(ϕ)) zugeführter Winkelwert (ϕ) durch einen Winkeloffsetwert (Δϕ) verändert wird, wobei dieser Winkeloffsetwert (Δϕ) so abgestimmt wird, dass der Betrag des am Lenkrad (17) vom Fahrer wahrgenommenen Lenkradrückstellmoments (M) bei Geradeausfahrt unterhalb einem applizierbaren Schwellwert (S) liegt.

2. Verfahren nach Anspruch 1, **dadurch gekennzeichnet, dass** der Winkeloffset (Δϕ) aus einem Langzeitwert (K1) und einem Kurzzeitwert (K2) errechnet wird.

3. Verfahren nach Anspruch 2, **dadurch gekennzeichnet, dass** für die Ermittlung des Langzeitwertes (K1) und/oder des Kurzzeitwertes (K2) wenigstens der Lenkradwinkel, die gemessene oder errechnete Querbeschleunigung, die Lenkwinkelgeschwindigkeit, die Fahrgeschwindigkeit, die gemessene oder gerechnete Längsbeschleunigung und/oder Eingriffsflags von Schlupfregel- und Fahrerassistenzsystemen berücksichtigt werden.

4. Verfahren nach Anspruch 3, **dadurch gekennzeichnet, dass** die Auswirkungen der vorgenannten Eingangsgrößen auf die Ermittlung des Langzeitwertes (K1) und/oder des Kurzzeitwertes (K2) wichtbar sind.

5. Verfahren nach Anspruch 4, **dadurch gekennzeichnet, dass** die Auswirkungen der vorgenannten Eingangsgrößen auf die Ermittlung des Langzeitwertes (K1) und/oder des Kurzzeitwertes (K2) linear mit Totband und Obergrenze wichtbar sind.

6. Verfahren nach wenigstens einem der Ansprüche 1 bis 5, **dadurch gekennzeichnet, dass** der Schwellwert (S) unter Berücksichtigung der Fahrzeugbetriebsbedingungen festgelegt wird.

7. Verfahren nach wenigstens einem der Ansprüche 1 bis 6, **dadurch gekennzeichnet, dass** die Rückstellfunktion (f(ϕ)) Bereiche aufweist, in welchen die Rückstellmomente (M) progressiv mit dem Lenkwinkel (ϕ) zunehmen.

8. Verfahren nach wenigstens einem der Ansprüche 1 bis 7, **dadurch gekennzeichnet, dass** die Rückstellfunktion (f(ϕ)) so gestaltet ist, dass ab einem vorgegebenen Lenkwinkel (ϕ) keine signifikante weitere Zunahme des Rückstellmomentes (M) erfolgt.

9. Verfahren nach Anspruch 8, **dadurch gekennzeichnet, dass** der vorgenannte Lenkwinkel (ϕ) in etwa bei 110° liegt

10. Elektromechanisches Lenksystem mit einem elektromechanischen Lenkhilfsmotor (23) der durch eine Ausgangssteuerung (25) angesteuert wird, wobei:
- die Ausgangssteuerung (25) derart konfiguriert ist, dass diese den Lenkhilfsmotor (23) derart ansteuert, dass an einem Fahrzeuglenkrad (17) durch den Fahrer ein Rückstellmoment (M) wahrnehmbar ist, welches das Lenkrad in eine zur Geradeausfahrt führende Winkelstellung zurückdrängt,
- das Lenkradrückstellmoment (M) nach Maßgabe einer Rückstellfunktion f(ϕ) eingestellt wird die als solche eine momentane Lenkwinkelstellung (ϕ) berücksichtigt,
- die Rückstellfunktion f(ϕ) so gestaltet ist, dass diese Rückstellmomente (M) vorgibt; die mit zunehmender Auslenkung des Fahrzeuglenkrades (17) aus der zum Geradeauslauf führenden Winkelstellung zunehmen,
- die Rückstellfunktion f(ϕ) im Bereich einer zur Geradeausfahrt vorgesehenen Winkelstellung eine Nullstelle aufweist, und
- die Rückstellfunktion f(ϕ) im Umgebungsbereich dieser Nullstelle Rückstellmomente (M) vorsieht, die betragsmäßig kleiner als die maximalen Rückstellmomente (M) sind,
**dadurch gekennzeichnet, dass**
eine Steuereinrichtung (24) vorgesehen ist, die derart ausgebildet und der Ausgangssteuerung (25) vorgeschaltet ist, dass ein von der Rückstellfunktion f(ϕ) berücksichtigter Winkelwert (ϕ) in Abhängigkeit von Lernbedingungen durch einen Winkeloffsetwert (Δϕ) verändert wird, wobei dieser Winkeloffsetwert (Δϕ) so abgestimmt wird, dass der Betrag des am Lenkrad (17) vom Fahrer wahrgenommenen Lenkradrückstellmoments (M) bei Geradeausfahrt unterhalb einer applizierbaren Schwelle (S) liegt.

## Claims

1. Method for adjusting a steering wheel restoring torque (M) which as such pushes back a vehicle steering wheel (17) into an angular position which leads to straight-ahead travel, wherein:
- the steering wheel restoring torque (M) is set in accordance with a restoring function (f(ϕ)) which takes into account as such an instantaneous steering angular position (ϕ),
- the restoring function (f(ϕ)) is configured in such a way that it predefines restoring torques (M) which, with increasing deflection of the vehicle steering wheel (17), increase from the angular position (ϕ) leading to straight-ahead travel,
- the restoring function (f(ϕ)) has a zero point in the region of an angular position (ϕ) provided for straight-ahead travel, and
- the restoring function (f(ϕ)) provides, in the region surrounding this zero point, restoring torques (M) which are smaller in absolute terms than the maximum restoring torques (M) which can be brought about by the restoring function (f(ϕ)),
**characterized in that**
an angular value (ϕ), supplied to the restoring function (f(ϕ)), is changed by an angular offset value (Δϕ), wherein this angular offset value (Δϕ) is adjusted in such a way that the absolute value of the steering wheel restoring torque (M) which is perceived at the steering wheel (17) by the driver is below an applicable threshold value (S) in the case of straight-ahead travel.

2. Method according to Claim 1, **characterized in that** the angular offset (Δϕ) is calculated from a long-term value (K1) and a short-term value (K2).

3. Method according to Claim 2, **characterized in that** at least the steering wheel angle, the measured or calculated lateral acceleration, the steering angular speed, the velocity, the measured or calculated longitudinal acceleration and/or intervention flags of traction control and driver assistance systems are taken into account for the determination of the long-term value (K1) and/or the short-term value (K2).

4. Method according to Claim 3, **characterized in that** the effects of the abovementioned input variables on the determination of the long-term value (K1) and/or of the short-term value (K2) can be weighted.

5. Method according to Claim 4, **characterized in that** the effects of the abovementioned input variables on the determination of the long-term value (K1) and/or of the short-term value (K2) can be weighted linearly with a dead band and upper limit.

6. Method according to at least one of Claims 1 to 5, **characterized in that** the threshold value (S) is defined taking into account the vehicle operating conditions.

7. Method according to at least one of Claims 1 to 6, **characterized in that** the restoring function (f(ϕ)) has regions in which the restoring torques (M) increase progressively with the steering angle (ϕ).

8. Method according to at least one of Claims 1 to 7, **characterized in that** the restoring function (f(ϕ)) is configured in such a way that no further significant increase in the restoring torque (M) takes place starting from a predefined steering angle (ϕ).

9. Method according to Claim 8, **characterized in that** the abovementioned steering angle (ϕ) is approximately 110°.

10. Electromechanical steering system having an electromechanical power steering motor (23) which is actuated by an output controller (25), wherein:
- the output controller (25) is configured in such a way that it actuates the power steering motor (23) in such a way that a restoring torque (M) which pushes back the steering wheel into an angular position which leads to straight-ahead travel can be perceived at a vehicle steering wheel (17) by the driver,
- the steering wheel restoring torque (M) is set in accordance with a restoring function f(ϕ) which takes into account as such an instantaneous steering angular position (ϕ),
- the restoring function f(ϕ) is configured in such a way that it predefines restoring torques (M) which, with increasing deflection of the vehicle steering wheel (17), increase from the angular position leading to straight-ahead travel,
- the restoring function f(ϕ) has a zero point in the region of an angular position provided for straight-ahead travel, and
- the restoring function f(ϕ) provides, in the region surrounding this zero point, restoring torques (M) which are smaller in absolute terms than the maximum restoring torques (M),
**characterized in that**
a control device (24) is provided which is embodied and connected upstream of the output controller (25) in such a way that an angular value (ϕ) which is taken into account by the restoring function f(ϕ), is changed as a function of learning conditions by an angular offset value (Δϕ), wherein this angular offset value (Δϕ) is adjusted in such a way that the absolute value of the steering wheel restoring torque (M) which is perceived at the steering wheel (17) by the driver is below an applicable threshold value (S) in the case of straight-ahead travel.

## Revendications

1. Procédé pour ajuster un couple de rappel (M) d'un volant de direction, qui, en tant que tel, ramène un volant de direction de véhicule (17) dans une position angulaire de conduite en ligne droite, dans lequel :
- le couple de rappel (M) du volant de direction est ajusté en fonction d'une fonction de rappel (f(ϕ)) qui tient compte, en tant que telle, d'une position instantanée de l'angle de direction (ϕ),
- la fonction de rappel (f(ϕ)) est configurée de telle sorte qu'elle prédéfinisse des couples de rappel (M) qui augmentent avec l'augmentation de la déviation du volant de direction de véhicule (17) par rapport à la position angulaire (ϕ) de conduite en ligne droite,
- la fonction de rappel (f(ϕ)) présente une position nulle dans la région d'une position angulaire (ϕ) prévue pour la conduite en ligne droite, et
- la fonction de rappel (f(ϕ)) prévoit, dans la région entourant cette position nulle, des couples de rappel (M) qui sont inférieurs en valeur absolue aux couples de rappel (M) maximaux pouvant être autorisés par la fonction de rappel (f(ϕ)),
**caractérisé en ce**
**qu'**une valeur angulaire (ϕ) acheminée à la fonction de rappel (f(ϕ)) est modifiée par une valeur de décalage angulaire (Δϕ), cette valeur de décalage angulaire (Δϕ) étant ajustée de telle sorte que la valeur absolue du couple de rappel (M) du volant de direction perçu par le conducteur au niveau du volant de direction (17) en conduite en ligne droite soit en dessous d'une valeur seuil applicable (S).

2. Procédé selon la revendication 1, **caractérisé en ce que** le décalage angulaire (Δϕ) est calculé à partir d'une valeur à long terme (K1) et d'une valeur à court terme (K2).

3. Procédé selon la revendication 2, **caractérisé en ce que** pour la détermination de la valeur à long terme (K1) et/ou de la valeur à court terme (K2), au moins l'angle du volant de direction, l'accélération transversale mesurée ou calculée, la vitesse de l'angle de direction, la vitesse de conduite, l'accélération longitudinale mesurée ou calculée et/ou des fanions d'intervention de systèmes de régulation d'antipatinage et de conduite assistée sont pris en compte.

4. Procédé selon la revendication 3, **caractérisé en ce que** les effets des grandeurs d'entrée susmentionnées sur la détermination de la valeur à long terme (K1) et/ou de la valeur à court terme (K2) sont pondérables.

5. Procédé selon la revendication 4, **caractérisé en ce que** les effets des grandeurs d'entrée susmentionnées sur la détermination de la valeur à long terme (K1) et/ou de la valeur à court terme (K2) sont pondérables linéairement avec une zone morte et une limite supérieure.

6. Procédé selon au moins l'une quelconque des revendications 1 à 5, **caractérisé en ce que** la valeur seuil (S) est fixée en tenant compte des conditions de fonctionnement du véhicule.

7. Procédé selon au moins l'une quelconque des revendications 1 à 6, **caractérisé en ce que** la fonction de rappel (f(ϕ)) présente des plages dans lesquelles les couples de rappel (M) augmentent progressivement avec l'angle de direction (ϕ).

8. Procédé selon au moins l'une quelconque des revendications 1 à 7, **caractérisé en ce que** la fonction de rappel (f(ϕ)) est configurée de telle sorte qu'à partir d'un angle de direction prédéfini (ϕ), il ne se produise plus d'augmentation significative du couple de rappel (M).

9. Procédé selon la revendication 8, **caractérisé en ce que** l'angle de direction susmentionné (ϕ) est situé approximativement à 110°.

10. Système de direction électromécanique comprenant un moteur de direction assistée électromécanique (23) qui est commandé par une commande de sortie (25), dans lequel :
- la commande de sortie (25) est configurée de telle sorte qu'elle commande le moteur de direction assistée (23) de telle sorte qu'un couple de rappel (M) soit perceptible par le conducteur au niveau d'un volant de direction de véhicule (17), lequel ramène le volant de direction dans une position angulaire de conduite en ligne droite,
- le couple de rappel (M) du volant de direction est ajusté en fonction d'une fonction de rappel (f(ϕ)) qui tient compte, en tant que telle, d'une position instantanée de l'angle de direction (ϕ),
- la fonction de rappel (f(ϕ)) est configurée de telle sorte qu'elle prédéfinisse des couples de rappel (M) qui augmentent avec l'augmentation de la déviation du volant de direction de véhicule (17) par rapport à la position angulaire de conduite en ligne droite,
- la fonction de rappel (f(ϕ)) présente une position nulle dans la région d'une position angulaire prévue pour la conduite en ligne droite, et
- la fonction de rappel (f(ϕ)) prévoit, dans la région entourant cette position nulle, des couples de rappel (M) qui sont inférieurs en valeur absolue aux couples de rappel (M) maximaux,
**caractérisé en ce**
**qu'**il est prévu un dispositif de commande (24) qui est réalisé de telle sorte et qui est monté en amont de la commande de sortie (25) de telle sorte qu'une valeur angulaire (ϕ) prise en compte par la fonction de rappel (f(ϕ)) soit modifiée par une valeur de décalage angulaire (Δϕ) en fonction de conditions d'apprentissage, cette valeur de décalage angulaire (Δϕ) étant ajustée de telle sorte que la valeur absolue du couple de rappel (M) du volant de direction perçu par le conducteur au niveau du volant de direction (17) en conduite en ligne droite soit en dessous d'une valeur seuil applicable (S).
